# EUROPÄISCHE PATENTANMELDUNG

(11) **EP 3 168 518 A1**
(43) Veröffentlichungstag der Anmeldung: **17.05.2017**
(21) Anmeldenummer: 16206758.1
(22) Anmeldetag: 21.04.2016
(51) Int. Cl.: F16L 25/00, F16L 33/26

(54) **ANSCHLUSSVORRICHTUNG FÜR EINE FLUIDFÜHRENDE LEITUNG**

(30) Priorität: 30.04.2015 DE 102015106792
(62) Teilanmeldung aus: 16166300.0
(71) Anmelder: Witzenmann GmbH, 75175 Pforzheim (DE)
(72) Erfinder: Bonanno, Daniel, 75245 Neulingen (DE); Paulig, Gerd, 75248 Ölbronn-Dürrn (DE)
(74) Vertreter: Lemcke, Brommer & Partner Patentanwälte Partnerschaft mbB

(57) **Zusammenfassung**

Vorgeschlagen wird eine Anschlussvorrichtung (1) für eine fluidführende Leitung mit einem ringgewellten Metallschlauch (5), umfassend: ein auf ein Ende des Metallschlauchs (5) aufsetzbares Anschlussstück (2); ein Schraubteil (11), welches eine Durchtrittsöffnung (11a) für den Metallschlauch (5) aufweist und mit dem Anschlussstück (2) verschraubbar ist, um wenigstens einen endständigen Wellenberg (8) des Metallschlauchs (5) gegen das Anschlussstück (2) dichtend zu verformen; und ein umlaufendes Dichtungselement (18), das zwischen dem Schraubteil (11) und dem Metallschlauch (5) angeordnet ist, wobei durch das Verschrauben des Anschlussstücks (2) und des Schraubteils (11) auf das Dichtungselement (18) einwirkbar ist, sodass eine Verformung des Dichtungselements (18) in radialer Richtung hin zu dem oder gegen den Metallschlauch (5) bewirkbar ist, welche Anschlussvorrichtung (1) sich dadurch auszeichnet, dass das Schraubteil (11) wenigstens ein weiteres Schraubteil (28) umfasst, das mit dem Schraubteil (11) verschraubbar ist, so dass das Schraubteil (28) zweiteilig aufgebaut ist, und dass beim Verschrauben von Schraubteil (11) und weiterem Schraubteil (28) durch das weitere Schraubteil (28) eine axiale Kraft auf das Dichtungselement (18) bewirkbar ist. Auf diese Weise ergibt sich eine wirksame Abdichtung des Metallschlauchs (5) gegenüber externen, insbesondere korrosiven Schadeinflüssen ohne die nachträgliche Anbringung eines Tapes oder dergleichen.

## Beschreibung

Die Erfindung betrifft eine Anschlussvorrichtung nach dem Oberbegriff des Anspruchs 1 für eine fluidführende Leitung mit einem ringgewellten Metallschlauch mit einem auf ein Ende des Metallschlauchs aufsetzbaren Anschlussstück und einem Schraubteil, welches eine Durchtrittsöffnung für den Metallschlauch aufweist und mit dem Anschlussstück verschraubbar ist, um wenigstens einen endständigen Wellenberg des Metallschlauchs gegen das Anschlussstück dichtend zu verformen, und ein umlaufendes Dichtungselement, das zwischen dem Schraubteil und dem Metallschlauch angeordnet ist, wobei durch das Verschrauben des Anschlussstücks und des Schraubteils auf das Dichtungselement einwirkbar ist, sodass eine Verformung des Dichtungselements in radialer Richtung hin zu dem oder gegen den Metallschlauch bewirkbar ist.

Weiterhin betrifft die Erfindung eine Anschlussverbindung mit einem ringgewellten Metallschlauch nach dem Oberbegriff des Anspruchs 8.

Außerdem betrifft die Erfindung ein Verfahren zum dichten Verbinden eines ringgewellten Metallschlauchs mit einer erfindungsgemäßen Anschlussvorrichtung gemäß Anspruch 11.

Es ist bekannt, einen ringgewellten Metallschlauch mit einer Anschlussvorrichtung zu versehen, um über die Anschlussvorrichtung einen dichten Anschluss des Metallschlauchs an ein weiteres Element bewirken zu können. Das Verbinden von Anschlussvorrichtung und Metallschlauch erfolgt beispielsweise so, wie in der EP 1 347 227 B1 beschrieben. Dort besteht die Anschlussvorrichtung im Wesentlichen aus einem Anschlussstück mit einem Außengewinde, einer auf den Metallschlauch aufschiebbaren und auf das Außengewinde des Anschlussstücks aufschraubbaren Überwurfmutter sowie einem in der Überwurfmutter gehaltenen Haltering für den Metallschlauch. Dabei besteht die Notwendigkeit, den Metallschlauch in den Bereichen, in denen er prinzipbedingt nicht von einer schützenden Ummantelung umgeben ist bzw. sein kann, vor äußerer Schadeinwirkung, insbesondere Korrosionseinflüssen, zu schützen.

Bei vorbekannten Lösungen, beispielsweise gemäß WO 2004/088087 A2 oder US 2015/0028584 A1, werden Dichtungselemente eingesetzt, um den nicht ummantelten Abschnitt eines Metallschlauch gegen die Umgebung abzudichten. Hierfür wurden bisher Dichtungselemente verwendet, die ohne radiale Anpressung an der Ummantelung des Metallschlauchs anliegen. Aufgrund von produktionsbedingten Toleranzen insbesondere in der Schichtdichte der Ummantelung sind derartige Dichtungselemente allein nicht in der Lage, eine hinreichend große Dichtwirkung zu erzielen.

Bei einer bekannten Bauform, der HYDRA GS Flexipipe aus dem Hause der Anmelderin, wird die Anschlussvorrichtung daher nach dem Befestigen des Metallschlauchs an einem Anschlussstück teilweise von außen mit einem Kunststoffband (Tape) umwickelt, um den Metallschlauch vor den schädlichen Einflüssen zu schützen. Als nachteilig erweist sich hierbei, dass das Anbringen des Kunststoffbands zeitaufwändig ist und die Dichtwirkung von der richtigen Anwendung durch eine Person abhängig ist. Hierdurch ergibt sich eine große Unsicherheit bezüglich des Grades der erzielten Dichtwirkung. Auch ist es bei bestimmten Montagebedingungen, beispielsweise in engen Umgebungen, unter Umständen nur schwer oder gar nicht möglich, das Kunststoffband an der Anschlussvorrichtung anzubringen.

Die EP 2 602 529 A2 offenbart eine Verbindungsvorrichtung für Schlauchleitungen.

In der EP 1 286 097 A2 ist eine Verbindung zwischen einem Ende eines schraubenlinienförmig gewellten Metallrohrs mit einem Anschlussstück gezeigt.

In der WO 2008/097053 A1 ist eine Schlauchverbindung offenbart.

Die DE 18 92 010 U zeigt einen Ölleitungsschlauch aus ölfestem, thermoplastischem Kunststoff.

Der Erfindung liegt die Aufgabe zugrunde, eine verbesserte Anschlussvorrichtung für einen ringgewellten Metallschlauch, eine hierauf basierende Anschlussverbindung sowie ein Verfahren zum dichten Verbinden eines ringgewellten Metallschlauchs mit einer geeignet ausgebildeten Anschlussvorrichtung anzugeben, sodass ein nachträgliches Umwickeln der Anschlussvorrichtung mit einem Kunststoffband überflüssig wird und eine gute Abdichtung auch bei produktionsbedingten Toleranzen im Bereich des Metallschlauchs und seiner Ummantelung gewährleistet ist.

Die Aufgabe wird gelöst durch eine Anschlussvorrichtung mit den Merkmalen des Anspruchs 1, durch eine Anschlussverbindung mit den Merkmalen des Anspruchs 8 sowie durch ein Verfahren mit den Merkmalen des Anspruchs 11. Vorteilhafte Weiterbildungen ergeben sich aus den jeweiligen abhängigen Ansprüchen.

Erfindungsgemäß wird bei einer Vorrichtung der eingangs beschriebenen Art die Aufgabe dadurch gelöst, dass das Schraubteil wenigstens ein weiteres Schraubteil umfasst, das mit dem Schraubteil verschraubbar ist, so dass das Schraubteil zweiteilig aufgebaut ist, und dass beim Verschrauben von Schraubteil und weiterem Schraubteil durch das weitere Schraubteil eine axiale Kraft auf das Dichtungselement bewirkbar ist.

In an sich bekannter Weise kommt es bei der Vorrichtung zu einer radialen Anpressung des Dichtungselements an die Ummantelung des Metallschlauchs oder den Metallschlauch selbst, wodurch sich produktionsbedingte Toleranzen insbesondere in der Schichtdichte der Ummantelung ausgleichen lassen, um eine hinreichend große Dichtwirkung zu erzielen. Auf das nachträgliche Anbringen eines Tapes kann somit verzichtet werden, was Zeit-, Kosten- und Montagevorteile mit sich bringt.

Durch das erfindungsgemäß vorgesehene zusätzliche Schraubteil kann das Maß der Einwirkung auf das Dichtungselement präziser als bei bekannten Anschlussvorrichtungen dosiert werden, und das Dichtungselement kann vor übermäßiger (axialer) Belastung bewahrt werden. Es kann in diesem Zusammenhang vorgesehen sein, dass das Dichtungselement zwischen den beiden Schraubteilen angeordnet ist.

Bevorzugt ist zwischen dem Schraubteil und dem weiteren Schraubteil ein Kraftübertragungselement angeordnet, vorzugsweise ein federelastisches Element, höchst vorzugsweise ein Federring, welches Kraftübertragungselement dazu ausgebildet und vorgesehen ist, beim Verschrauben von Schraubteil und weiterem Schraubteil eine gezielte Beeinflussung, insbesondere eine Verzögerung der Krafteinwirkung auf das Dichtungselement zu bewirken. Dabei ist zu beachten, dass die Kraft, welche zum Verformen des Endbereichs des Metallschlauchs aufgewandt werden muss, regelmäßig kleiner ist als diejenige Kraft, welche zum Verformen eines (geeignet ausgewählten) Kraftübertragungselements benötigt wird. Damit lässt sich einerseits eine mechanische Verzögerung der Krafteinwirkung auf das Dichtungselement erreichen, und andererseits kann dieses insbesondere durch die Rückhaltekraft des Kraftübertragungselements vor einer übermäßigen axialen Beanspruchung geschützt werden.

Im Zuge einer Weiterbildung kann der Metallschlauch wenigstens in Teilbereichen mit einer Ummantelung versehen ist, vorzugsweise in Form einer Kunststoffschicht, wobei höchst vorzugsweise das Dichtungselement im Bereich der Ummantelung angeordnet oder anzuordnen ist. Eine Ummantelung, insbesondere aus Kunststoff, beispielsweise einem Elastomer, lässt sich im Gegensatz zu dem Metallschlauch durch eine radiale Anpressung des Dichtungselements leichter radial verformen, um das Bewirken einer dichtenden Verbindung zu begünstigen. Außerdem schützt und stabilisiert sie den Metallschlauch in an sich bekannter Weise.

Vorzugsweise ist das Dichtungselement als O-Ring oder als im Querschnitt vorzugsweise rechteckiger Dichtring oder aber als im Querschnitt etwa L- oder U-förmiger Dichtring ausgebildet, höchst vorzugsweise in einem Kunststoff, insbesondere bevorzugt aus einem Elastomer. Hierdurch wird die Dichtwirkung günstig beeinflusst. Bei Ausgestaltung des Dichtungselements als im Querschnitt etwa L- oder U-förmiger Dichtring kann dieser so angeordnet sein, dass sich wenigstens einer seiner freien Schenkel in den lichten Bereich der Durchtrittsöffnung für den Metallschlauch hinein erstreckt und dort dichtend mit dem Metallschlauch in Wechselwirkung treten kann.

In einer weiteren vorteilhaften Ausführungsform umgibt das Anschlussstück das Schraubteil nach dem Verschrauben wenigstens in Teilbereichen nach Art einer Überwurfmutter oder ist von diesem umgeben, so dass das Schraubteil einmal als Einschraubteil (mit Außengewinde) und einmal als Aufschraubteil (mit Innengewinde) ausgebildet ist. Das Anschlussstück ist entsprechend in Teilbereichen komplementär ausgebildet. Dadurch wird die Einsatzflexibilität der vorgeschlagenen Anschlussvorrichtung erhöht.

In einer alternativen Ausführungsform kann das Schraubteil im Bereich einer Schulter eine entgegen der Richtung vom Anschlussstück zum Schraubteil hin radial nach innen zulaufende Schräge, d.h. wiederum eine Konusform aufweisen. Dadurch lässt sich die zuvor beschriebene Wirkung analog umsetzen.

Im Zuge einer Weiterbildung kann zwischen dem Schraubteil und dem Anschlussstück ein weiteres umlaufendes Dichtungselement angeordnet sein, vorzugsweise ein O-Ring. Dadurch kann verhindert werden, dass über das Gewinde, über welches das Anschlussstück und das Schraubteil miteinander verbunden sind, schädliche Stoffe auf den Metallschlauch einwirken. Umgekehrt dichtet das Dichtungselement auch gegenüber einem möglichen Entweichen des Fluids aus dem Metallschlauch in die Umgebung ab.

Eine erfindungsgemäße Anschlussverbindung umfasst wenigstens eine erfindungsgemäße oder gemäß dem Vorstehenden weitergebildete Anschlussvorrichtung und einen mit der Anschlussvorrichtung verbundenen ringgewellten Metallschlauch, um ein einfaches Abdichten des Metallschlauchs gegen die Umgebung zu erreichen, ohne dass hierfür das nachträgliche Anbringen eines Tapes erforderlich wäre.

In einer bevorzugten Ausführungsform ist der Metallschlauch wenigstens in Teilbereichen mit einer Ummantelung versehen, vorzugsweise in Form einer Kunststoffschicht. Die Ummantelung des Metallschlauchs erleichtert die dichtende Verbindung zwischen dem Dichtungselement und dem Metallschlauch und schützt den Metallschlauch vor korrosiven Einflüssen.

Bevorzugt steht die Ummantelung in dichtender Wirkverbindung mit dem Dichtungselement. Die Verbindung zwischen dem Dichtungselement und der Ummantelung, die vorzugsweise beide in einem Kunststoff ausgebildet sind bzw. wenigstens einer Kunststoffschicht aufweisen, hat sich als besonders wirksam dichtend erwiesen. Außerdem kann es so zu keiner äußeren Schadeinwirkung auf den Metallschlauch selbst kommen.

Ein wieder anderer Aspekt der Erfindung betrifft ein Verfahren zum dichten Verbinden eines ringgewellten Metallschlauchs mit einer erfindungsgemäß ausgebildeten Anschlussvorrichtung. Das Verfahren beinhaltet den Schritt, dass auf ein Ende des Metallschlauchs das Anschlussstück aufgesetzt wird. Weiterhin wird der Metallschlauch durch die Durchtrittsöffnung in dem Schraubteil gesteckt. Des Weiteren erfolgt ein Verschrauben des Anschlussstücks und des Schraubteils, wobei eine Verformung wenigstens eines vorzugsweise endständigen Wellenberges des Metallschlauchs erfolgt. Weiterhin erfolgt ein Verschrauben des Schraubteils mit dem weiteren Schraubteil, wobei ein Einwirken des weiteren Schraubteils auf das Dichtungselement erfolgt, und das Dichtungselement wird in radialer Richtung in Anlage an den Metallschlauch oder eine Ummantelung desselben gebracht. Dadurch kann das Verfahren zum dichten Anbinden eines ringgewellten Metallschlauchs um den Schritt des Umwickelns der Anschlussvorrichtung mit einem Kunststoffband (Tape) verkürzt werden kann. Dabei kann zudem die Qualität der dichtenden Verbindung erhöht werden.

Weitere Vorteile und Eigenschaften der Erfindung ergeben sich aus der folgenden Beschreibung von Ausführungsbeispielen anhand der Zeichnung.
Fig. 1 zeigt eine Teilansicht einer erfindungsgemäßen Anschlussvorrichtung vor der Verschraubung von Schraubteil und Anschlussstück im Längsschnitt; und
Fig.2 zeigt die Teilansicht der Anschlussvorrichtung gemäß Figur 1 nach der Verschraubung von Schraubteil und Anschlussstück.

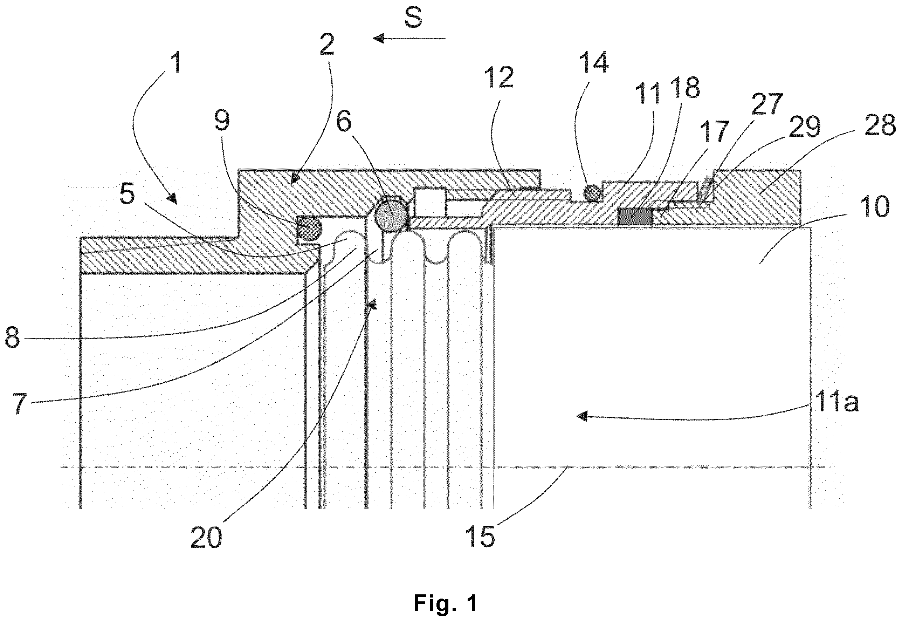

In Figur 1 ist ein Längsschnitt durch eine Anschlussvorrichtung 1 gezeigt, welche ein Anschlussstück 2 umfasst. Das Anschlussstück 2 ist auf ein Ende eines ringgewellten Metallschlauchs 5 gesteckt. Hierzu weist das Anschlussstück 2 einen Haltering 6 auf, welcher in ein Wellental 7 des Metallschlauchs 5 eingreift und mit einem endständigen Wellenberg 8 am Ende des Metallschlauchs 5 zusammenwirkt, um ein Herausrutschen des Metallschlauchs 5 aus dem Anschlussstück 2 zu verhindern. Der Haltemechanismus des Anschlussstücks 2 auf dem Metallschlauch 5 ist dem Prinzip nach in der EP 1 347 227 B1 beschrieben. Auf eine detaillierte Beschreibung wird hier daher verzichtet.

Das Anschlussstück 2 weist weiterhin einen O-Ring 9 auf, welcher eine dichtende Wirkung hat und einen Austritt eines in dem Metallschlauch 5 geführten Fluids verhindern soll. Der Metallschlauch 5 ist in einem Teilbereich von einer Ummantelung 10 in Form einer Kunststoffschicht umgeben, die die Funktion eines Korrosionsschutzes für den Metallschlauch 5 erfüllt. Ein Anfangsbereich des Anschlussstücks 2 weist ein Innengewinde 12 auf, über welches das Anschlussstück 2 mit einem Schraubteil 11 verbunden ist, welches Schraubteil 11 ein geeignet komplementär ausgebildetes Außengewinde aufweist.

Die lineare Bewegungsrichtung der Verschraubung ist mit dem Pfeil S gekennzeichnet. Im Inneren des Schraubteils 11 ist eine Durchtrittsöffnung 11a vorgesehen, durch welche der Metallschlauch 5 geführt ist. An einem dem Schraubteil 11 zugwandten Ende des Anfangsbereichs des Anschlussstücks 2 befindet sich ein weiterer O-Ring 14, der zwischen Anschlussstück 2 und Schraubteil 11 angeordnet ist und ein Eindringen von potentiell korrosiven Medien in den Anfangsbereich und ein schädliches Einwirken auf den Metallschlauch 5 verhindern soll.

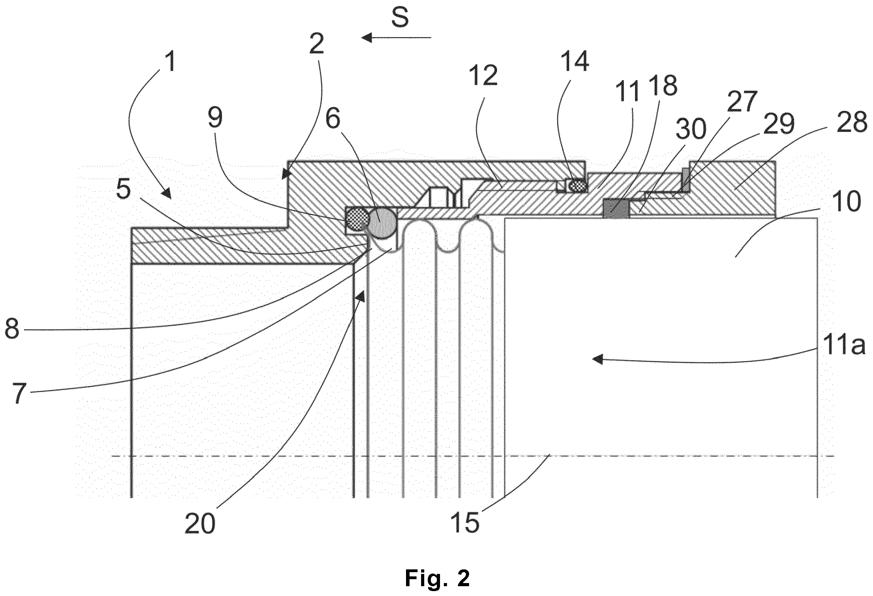

Das Schraubteil 11 umfasst ein weiteres Schraubteil 28, welches über ein Gewinde 29 mit dem Schraubteil 11 verbindbar ist und eine Schulter 30 aufweist, auf deren Funktion weiter unten eingegangen wird. Zwischen dem weiteren Schraubteil 28 und dem Schraubteil 11 ist ein Kraftübertragungselement 27 in Form eines relativ steifen Federrings angeordnet. Beim Verschrauben des weiteren Schraubteils 28 mit dem Schraubteil 11 wird dadurch vorzugsweise zunächst das Schraubteil 11 mit dem Anschlussstück 2 verschraubt, da weniger Kraft aufgebracht werden muss, um den Halterring 6 in die vorgesehen Lage, wie sie in Figur 2 dargestellt ist, zu bringen und den Wellenberg 8 des Metallschlauchs 5, wie in EP 1 347 227 B1 beschrieben, zu verformen, als für eine axiale Stauchung oder Kompression des Kraftübertragungselements 27. Ist das Schraubteil 11 in der vorgesehenen Endposition relativ zum Anschlussstück 2 angelangt, so beginnt der Vorgang des Verschraubens von Schraubteil 11 mit dem weiteren Schraubteil 28 unter gleichzeitiger Verformung des Kraftübertragungselements 27.

Der Endzustand nach dem Verschrauben ist - wie bereits erwähnt - in Figur 2 dargestellt. Das weitere Schraubteil 28 hat mit seiner Schulter 30 das Dichtungselement 18 axial gegen das Schraubteil 11 gepresst, wodurch das Dichtungselement 18 radial in Richtung des Metallschlauchs 5 bzw. der Ummantelung 10 ausgewichen ist und nun in dichtender Wirkverbindung mit der Ummantelung 10 steht.

## Patentansprüche

1. Anschlussvorrichtung (1) für eine fluidführende Leitung mit einem ringgewellten Metallschlauch (5), umfassend:
ein auf ein Ende des Metallschlauchs (5) aufsetzbares Anschlussstück (2);
ein Schraubteil (11), welches eine Durchtrittsöffnung (11a) für den Metallschlauch (5) aufweist und mit dem Anschlussstück (2) verschraubbar ist, um wenigstens einen endständigen Wellenberg (8) des Metallschlauchs (5) gegen das Anschlussstück (2) dichtend zu verformen; und
ein umlaufendes Dichtungselement (18), das zwischen dem Schraubteil (11) und dem Metallschlauch (5) angeordnet ist,
wobei durch das Verschrauben des Anschlussstücks (2) und des Schraubteils (11) auf das Dichtungselement (18) einwirkbar ist, sodass eine Verformung des Dichtungselements (18) in radialer Richtung hin zu dem oder gegen den Metallschlauch (5) bewirkbar ist,
**dadurch gekennzeichnet, dass**
das Schraubteil (11) wenigstens ein weiteres Schraubteil (28) umfasst, das mit dem Schraubteil (11) verschraubbar ist, so dass das Schraubteil (11, 28) zweiteilig aufgebaut ist,
und dass beim Verschrauben von Schraubteil (11) und weiterem Schraubteil (28) durch das weitere Schraubteil (28) eine axiale Kraft auf das Dichtungselement (18) bewirkbar ist.

2. Anschlussvorrichtung (1) nach Anspruch 1, **dadurch gekennzeichnet, dass** der Metallschlauch (5) wenigstens in Teilbereichen mit einer Ummantelung (10) versehen ist, vorzugsweise in Form einer Kunststoffschicht, und dass höchst vorzugsweise das Dichtungselement (18) im Bereich der Ummantelung (10) angeordnet oder anzuordnen ist.

3. Anschlussvorrichtung (1) nach einem der vorangegangenen Ansprüche, **dadurch gekennzeichnet, dass** das Dichtungselement (18) als O-Ring oder als im Querschnitt vorzugsweise rechteckiger Dichtring oder als im Querschnitt etwa L- oder U-förmiger Dichtring ausgebildet ist, höchst vorzugsweise in einem Kunststoff, insbesondere in einem Elastomer.

4. Anschlussvorrichtung (1) nach einem der vorangegangenen Ansprüche, **dadurch gekennzeichnet, dass** das Anschlussstück (2) das Schraubteil (11) nach dem Verschrauben wenigstens in Teilbereichen umgibt oder von diesem umgeben ist.

5. Anschlussvorrichtung (1) nach einem der Ansprüche 1 bis 4, **dadurch gekennzeichnet, dass** das Schraubteil (11) eine entgegen der Richtung (S) radial nach innen zulaufende Schräge (21; 25) aufweist.

6. Anschlussvorrichtung (1) nach einem der vorangehenden Ansprüche, **dadurch gekennzeichnet, dass** zwischen dem Schraubteil (11) und dem weiteren Schraubteil (28) ein Kraftübertragungselement (27) angeordnet ist, vorzugsweise ein federelastisches Element, höchst vorzugsweise ein Federring, welches Kraftübertragungselement (27) dazu ausgebildet und vorgesehen ist, beim Verschrauben von Schraubteil (11) und weiterem Schraubteil (28) eine Beeinflussung, insbesondere Verzögerung der Krafteinwirkung auf das Dichtungselement (18) zu bewirken.

7. Anschlussvorrichtung (1) nach einem der Ansprüche 1 bis 6, **dadurch gekennzeichnet, dass** zwischen dem Schraubteil (11) und dem Anschlussstück (2) ein weiteres umlaufendes Dichtungselement (14) angeordnet ist, vorzugsweise ein O-Ring.

8. Anschlussverbindung, umfassend eine Anschlussvorrichtung (1) und einen mit der Anschlussvorrichtung (1) verbundenen ringgewellten Metallschlauch (5),
**dadurch gekennzeichnet, dass**
die Anschlussvorrichtung (1) nach einem der vorangegangenen Ansprüche ausgebildet ist.

9. Anschlussverbindung nach Anspruch 8, **dadurch gekennzeichnet, dass** der Metallschlauch (5) wenigstens in Teilbereichen mit einer Ummantelung (10) versehen ist, vorzugsweise in Form einer Kunststoffschicht.

10. Anschlussverbindung nach Anspruch 9, **dadurch gekennzeichnet, dass** die Ummantelung (10) in dichtender Wirkverbindung mit dem Dichtungselement (18) steht.

11. Verfahren zum dichten Verbinden eines ringgewellten Metallschlauchs (5) mit einer gemäß einem der Ansprüche 1 bis 7 ausgebildeten Anschlussvorrichtung (1), beinhaltend, dass auf ein Ende des Metallschlauchs (5) das Anschlussstück (2) aufgesetzt wird; dass der Metallschlauch (5) durch die Durchtrittsöffnung (11a) in dem Schraubteil (11) gesteckt wird; dass ein Verschrauben des Anschlussstücks (2) und des Schraubteils (11) erfolgt, wobei eine Verformung wenigstens eines vorzugsweise endständigen Wellenberges (8) des Metallschlauchs (5) erfolgt; und dass ein Verschrauben des Schraubteils (11) mit dem weiteren Schraubteil (28) erfolgt, wobei ein Einwirken des weiteren Schraubteils (28) auf das Dichtungselement (18) erfolgt und das Dichtungselement (18) in radialer Richtung in Anlage an den Metallschlauch (5) oder eine Ummantelung (10) desselben gebracht wird.
